# EUROPÄISCHE PATENTSCHRIFT

(11) **EP 2 137 427 B1**
(45) Veröffentlichungstag und Bekanntmachung des Hinweises auf die Patenterteilung: **04.07.2018**
(21) Anmeldenummer: 08716445.5
(22) Anmeldetag: 12.03.2008
(51) Int. Cl.: F16D 65/14

(54) **ELEKTRISCHE PARKIERBREMSE**
ELECTRIC PARKING BRAKE
FREIN DE PARKING ÉLECTRIQUE

(30) Priorität: 30.03.2007 DE 102007015809
(43) Veröffentlichungstag der Anmeldung: 30.12.2009
(73) Patentinhaber: IPGATE AG, 8808 Pfäffikon SZ (CH)
(72) Erfinder: LEIBER, Heinz, 71739 Oberriexingen (DE); LEIBER, Thomas, 81675 München (DE)
(74) Vertreter: Lenzing Gerber Stute
(86) Internationale Anmeldenummer: PCT/EP2008/001938
(87) Internationale Veröffentlichungsnummer: WO 2008/119442

(56) Entgegenhaltungen:
- DE-A1- 10 320 907
- DE-A1- 19 643 150
- DE-A1- 19 817 892

## Beschreibung

Die Erfindung betrifft eine elektrische Parkierbremse nach dem Oberbegriff des Anspruch 1.

Die elektrische Parkierbremse findet zusehends Einzug im Kfz wegen Montage und Wartungsvorteilen und Ausbau zur automatischen Anfahrhilfe, was besonders am Berg vorteilhaft ist. Man unterscheidet zwei Grundprinzipien:
1. Die elektrische Parkierbremse weist einen Stellmotor mit Getriebe auf. Dieser wirkt direkt auf den Bremskolben. Hier muss der Antrieb sehr große Spannkräfte aufbringen;
2. Der Bremskolben wird von einem hydraulischen Druck z. B. vom Hauptbremszylinder, von EHB oder ESP vorgespannt, und ein relativ kleiner E-Motor mit Spindel verriegelt diese Kolbenstellung und der Vorspanndruck verschwindet.

Beide Lösungen müssen im Verstellweg den Belagverschleiß berücksichtigen. Die vorliegende Erfindung baut auf der zweiten Lösung auf, welche aus der DE 10 2004046 871 bekannt ist. Die DE 10 2004046 971 zeigt eine Parkierbremse, die eine vom Antriebsmotor angetriebene Spindel aufweist, welche in einem beweglichen Hilfskolben gelagert ist und auf den Bremskolben wirkt. Die Spindel ist axial beweglich angeordnet und vorzugsweise im luftgefüllten Raum angeordnet, kann aber auch im Hydraulikfluid betrieben werden. Der E-Motor wirkt über ein Getriebe auf die Spindel und kann auch mit dieser direkt verbunden sein.

Die elektrische Parkierbremse der DE 10 2004060 906 verwendet ebenfalls einen Kolben mit Hilfsfeder, wobei die Spindel in diesem gelagert und direkt mit dem Anker mit Wicklung eines Kommutatormotors verbunden ist. Der Anker mit Bürsten ist in einem luftgefüllten Raum angeordnet, da ein Betrieb in der Bremsflüssigkeit praktisch nicht möglich ist. Im Gegensatz zur Parkierbremse der DE 10 2004046 971 wirkt die axial bewegliche Spindel mit Anker nicht direkt, sondern über ein Spielausgleichselement auf den Bremskolben. Die Parkierbremse der DE 10 2004055 876 baut auf der Parkierbremse der DE 10 2004046 971 auf und verwendet ein mehrstufiges Verrieglungsverfahren, in dem jeweils der Kolbenweg gemessen wird. Der Weg wird aus dem Ripple des Kommutatormotors ausgewertet (sog. Ripple count), was als sehr ungenau gilt, insbesondere beim Anlauf des Motors.

Ferner sind noch elektrohydraulisch betätigbare Fahrzeugbremsen mit Feststelleinrichtungen aus den DE 10320907 und DE 19732168 bekannt.

Aufgabe der Erfindung ist es, eine elektrische Parkierbremse bereitzustellen, die einfach in ihrem Aufbau ist und mit geringen Antriebskräften auskommt.

Diese Aufgabe wird erfindungsgemäß mit einer elektrischen Parkierbremse mit den Merkmalen des Patentanspruch 1 gelöst. Weitere vorteilhafte Ausgestaltungen der Parkierbremse nach Anspruch 1 ergeben sich durch die Merkmale der Unteransprüche. Die erfindungsgemäße Parkierbremse zeichnet sich vorteilhaft dadurch aus, dass sie einfach in ihrem Aufbau ist. Zudem werden nur kleine Antriebskräfte für die Spindel benötigt, wodurch sich vorteilhaft nur eine kleine Stromaufnahme und somit nur ein geringer Energiebedarf ergibt. Durch den besonderen Aufbau der erfindungsgemäßen Parkierbremse treten wenn überhaupt nur sehr kleine Verklemm- oder Haftkräfte für die Spindel auf.

Der Rotor und der Stator sind vorteilhaft durch eine Glocke oder Hülse aus unmagnetischen Material voneinander getrennt. Dabei kann der Rotor in der Glocke bzw. Hülse gelagert sein. Die Lagerung erfolgt vorzugsweise über Gleitstücke, die in dem Rotor integriert sind und auch das Target für den Drehwinkelgeber aufnehmen. Es bietet sich an, eine redundante Wicklung einzusetzen, was besonders einfach ist bei einem Mehrscheiben-Reluktanzmotor. Dadurch wird die Ausfallrate auf ein Minimum reduziert.Die erfindungsgemäße Parkierbremse zeichnet sich ferner vorteilhaft durch eine kurze Baulänge, ein geringes Gewicht, geringe Ausfallrate sowie einem minimalen Verschleiß aus. Zudem ist vorteilhaft eine direkte Messung des Kolbenweges für die Erfassung der Verriegelung sowie den Belagverschleiß möglich. Gleichfalls kann die Parkierbremse vorteilhaft als Teil einer Diebstahlwarnanlage und Wegfahrsperre verwendet werden.

Der vorteilhafte Einsatz einer bürstenlosen Antriebsmaschine, wie z. B. einer Asynchron- oder Synchronmaschine oder einer nach dem Reluktanzprinzip arbeitenden Maschine, ermöglicht den Einsatz des einfachen Rotors im Druckraum. Damit entfallen vorteilhaft viele Dichtungen. Der Rotor ist vorzugsweise axial fixiert und die Spindel ist über eine Kupplung axial beweglich. Dadurch wird die Motorbaulänge kurz, weil nicht der relativ große Weg für den Belagverschleiß berücksichtigt werden muss. Rotor und Spindel sind vorzugsweise koaxial angeordnet. Die Spindelmutter ist 2-teilig ausgebildet, wobei eine federbelastete Mutter über die Spindel vorgespannt ist, bis die Spindel in der Hauptmutter zum Tragen kommt. Bei Entspannung der Spindel wird diese über die sogenannte Auswurfmutter von der Anpressung in den Gewindegängen gelöst. Damit entfallen vorteilhaft zum Antrieb die Haftkräfte im Gewinde. Ferner wirkt die Spindel über eine bewegliche Druckplatte auf den Kolben. Damit ist ein relativ großer Versatz zwischen Spindel und Kolbenachse möglich und ein Verklemmen der Spindel ausgeschlossen.

Beide Maßnahmen führen dazu, dass vorteilhaft nur sehr kleine Antriebsmomente benötigt werden. Der Rotor kann vorteilhaft mit einem Drehwinkelgeber versehen sein, welcher notwendig ist für die Ansteuerung der Statorspule. Gleichzeitig kann hierdurch sehr genau der Spindel- bzw. Kolbenweg zur Diagnose der Verriegelung und des Belagverschleißes gemessen werden.

Der Aufbau der Parkierbremse ist sehr einfach, in dem der Bremssattel und das Statorgehäuse gegeneinander abgedichtet sind. Durch Anordnung der Spindel mit Mutter innerhalb des Bremskolbens und Motor mit fest stehendem Anker, ist die Baugröße insbesondere die Baulänge sehr kurz, so dass sich die elektrische Parkierbremse auch am Vorderachsbremssattel einsetzen lässt. Daher biet sich an, bei Fahrzeugen mit Heckantrieb und einer Achslastverteilung von nahezu 50:50 die Elektrische Parkierbremse an der HA zu platzieren und bei Fahrzeugen mit Frontantrieb mit Achslastverteilung 60:40 an der Vorderachse, da die Bremswirkung hier größer ist. Auch eine diagonale Anwendung ist möglich.

Die Anzahl der druckbelasteten Dichtungen ist vorteilhaft minimal. Lediglich eine dynamische Dichtung für Kolben und eine statische zur Abdichtung der Gehäuse werden benötigt.

Es bietet sich an, die Motoransteuerung in einem zentralen Steuergerät der Fahrdynamiksysteme , z. B. ESP zu integrieren, da hier über die übliche Busvernetzung alle Signale vorhanden sind, und damit auch der Kabelsatz vereinfacht wird. Da im Gegensatz zu einem Kommutatormotor die Ansteuerung des z. B. Reluktanzmotors nur über eine Elektronik möglich ist, kann die EPB gleich als Diebstahlschutz verwendet werden, was die Kosten für eine el. Lenkradverriegelung einspart. Über das ESP-System und den vorhandenen Beschleugungssensor, der gleichsam als Neigungsgeber verwendet werden kann, kann z. B. ein einseitiges Aufbocken des Fahrzeuges und auch ein Aufladen zum Abschleppen erkannt und eine entsprechendes Warnsignal erzeugt werden.

Für die Verfügbarkeit ist es wichtig, dass die EPB auch bei Ausfall des Bordnetzes vor dem Stillsetzen des Fahrzeugs noch funktioniert. Denkbar ist ein Generatorausfall, bei dem das Fahrzeug noch bis zum Ausfall der Motorsteuerung bewegt wird. Ein anschließendes Parken mit der erfindungsgemäßen Parkierbremse sollte aus Sicherheitsgründen noch möglich sein. Die Betriebsstromstärke der Parkierbremse muss hier unter der Funktionsgrenze der Motorsteuerung liegen.

Wie bereits erwähnt, ist die erfindungsgemäße elektrische Parkierbremse einfacher, leichter, kleiner, ausfallsicherer und hat eine höhere Funktionalität.

Nachfolgend wird eine mögliche Ausführungsform der elektrischen Parkierbremse anhand von Zeichnungen näher erläutert.

Es zeigen:
- Fig. 1:: Querschnittsdarstellung durch die erfindungsgemäße elektrische Parkierbremse;
- Fig. 2a und 2b:: Ausschnittsvergrößerungen, die das Zusammenwirken der Hauptspindelmutter mit der Auswurfmutter erläutern;
- Fig. 3:: Funktionsdiagramm;
- Fig. 4:: Druck-Zeit-Diagramm.

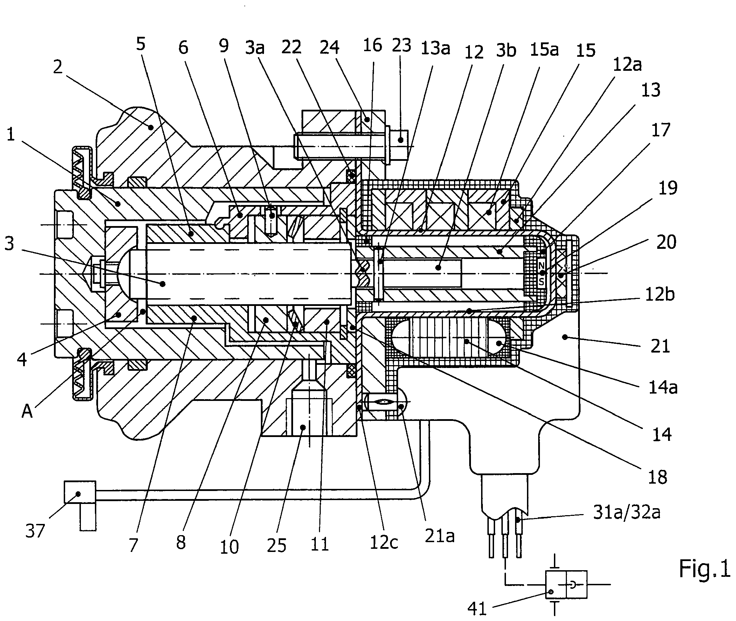

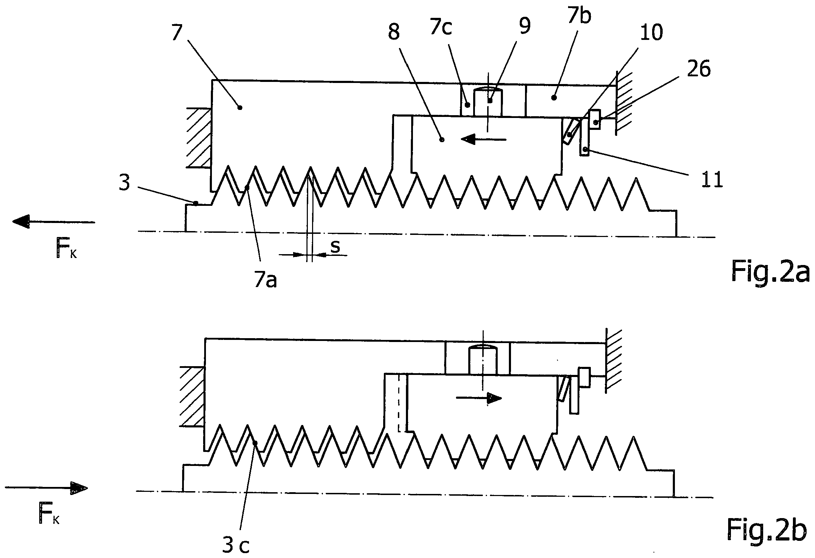

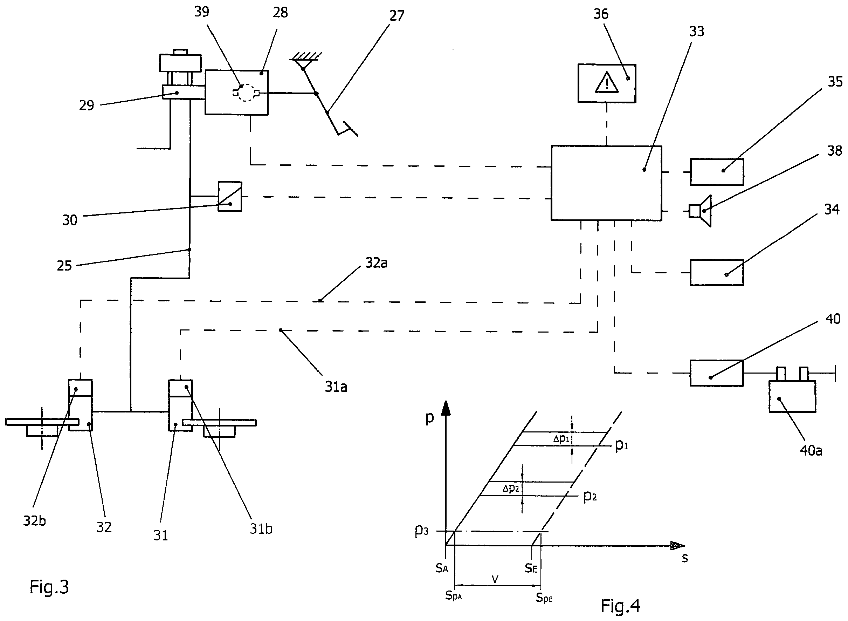

Die Fig. 1 zeigt den Gesamtaufbau von Bremssattel 2 mit Bremskolben 1 und Aktuator. Bekannte Details wie Aufbau der Bremse, Bremsbelag und Dichtungen werden nicht beschrieben. Über die Druckleitung 25 wird vom Bremsgerät Druck beim Parkieren eingesteuert, wie es im Detail anhand der Figuren 3 und 4 beschrieben später genauer beschrieben wird. Der Bremskolben 1 drückt auf das nicht beschriebene Bremspad, gleichzeitig oder zeitversetzt bewegt der Rotor 13 über die Stiftkupplung 13a, die Spindel 3, welche die Kraft über die bewegliche Druckplatte 4 auf den Kolben 1 überträgt. Der Druck wird eine kurze Zeit auf dem Niveau gehalten, bis vorzugsweise sich die Spindel 3 nicht mehr bewegt, da sie an der Druckplatte 4 anliegt. Die Bewegung der Spindel wird über den Drehwinkelsensor des Rotors erfasst. Nach dem Druckabbau wirkt die Spannkraft des Bremssattels 2 voll über die Druckplatte 4 und Spindel 3 auf den Flansch mit Hauptspindelmutter 7 und Auswurfmutter 8, deren Funktion anhand der Figuren 2a und 2b beschrieben wird. Die einstückige Hauptspindelmutter 7 kann auch durch zwei einfacher zu fertigende Teile 5 und 6 ersetzt werden, wobei Teil 6 einen Flansch bildet, der mit der Auswurfmutter 8 zusammenwirkt. Die bewegliche Druckplatte 4 verhindert große Querkräfte auf das Gewinde 3c, 7a und ein Verklemmen, um minimale Antriebskräfte des Spindelbetriebs zu realisieren. Die Spindel 3 und der Rotor 13 sind über eine Kupplung 13a getrennt, damit sich ein radialer Versatz von Spindel 3 und Rotor 13 nicht auf den Rotor 13 auswirkt. Weiterhin ist der Rotor 13 axial fixiert, wodurch die Baulänge kurz gehalten wird. In Anbetracht des großen Verstellweges für die Spindel 3, welcher benötigt wird, um den Bremsbelagverschleiß zu berücksichtigen, ergibt sich dennoch insgesamt eine kurze Baulänge der gesamten Vorrichtung. Hierfür hat die Spindel 3 einen Fortsatz 3a, der einen sich in axialer Richtung erstreckenden Schlitz 3b aufweist. Die Trennung von Rotor 13 und Spindel 3 über die Stiftkupplung 13a reduziert die Wärmeübertragung der Spindel 3, welche mit dem heißen Bremskolben 1 in Berührung steht.

Der Rotor 13 besitzt an beiden Enden Gleitringe 16 und 17, die sich an der Innenwandung 12b der Glocke 12 bewegen. Das Gleitstück 17 trägt zusätzlich das Target 19, z. B. einen Permanentmagneten, für den Drehwinkelgeber 20, wenn z. B. das Hall-Prinzip eingesetzt wird. Beide Gleitstücke 16, 17 werden vorzugsweise so geformt, dass sie den freien Luftraum in den z. B. Nuten und Bohrung des Rotors ausfüllen, um eine gute Entlüftung über eine nicht dargestellte Entlüfterschraube zu gewährleisten, welche im Bereich der räumlich höchsten Stelle zur guten Entlüftung angeordnet ist. Auf den Rotor 13 wirkt ein Drehmoment aus dem Magnetfluss des Stators einer bürstenlosen E-Maschine. Hier können zum Einsatz kommen alle bekannten Prinzipien wie Asynchron, Synchron oder Reluktanzmaschine. Letztere wird wegen des einfachen Aufbaus und der hohen Temperaturbelastung bevorzugt. Der Stator kann wie in der unteren Bildhälfte konventionell aus Polblechen 14 und Wickelkopf 14a aufgebaut sein. Der Magnetfluss geht über die unmagnetische Glocke 12 und trennt zugleich den Stator 14 vom Hochdruckraum des Rotors 13.

In der oberen Bildhälfte ist ein scheibenförmiger Aufbau des Eisenkreises 15 mit Spule 15a gezeigt, welcher im gezeichneten Beispiel einem 3-poligen Stator des Reluktanzmotors entspricht. Diese Ausführung ist vorteilhaft, wenn redundante Wicklungen eingesetzt werden, die hier als Zylinderspule einfach aufgeführt werden können. Die Statorbleche liegen in beiden Ausführungen auf der äußeren Mantelfläche der Glocke 12 an, um diese bei der hohen Druckbelastung abzustützen. Zusätzlich ist am Ende des Stators noch ein Abstützring 12a eingesetzt. Stator 14, 15 mit Wicklung 14a, 15 sind zusammen mit dem Drehwinkelgeber 20 und Abstützring 12a im Gehäuse 21 eingespritzt. Es bietet sich hier an, den ABS-Drehzahlfühler ebenso einzuspritzen, um eine getrennte wasserdichte Steckverbindung einzusparen und ggf. eine gemeinsame Masseleitung mit Drehwinkelgeber zu nutzen. Hier können alle Leitungen über eine Trennkupplung zur Karosserie geführt werden. Auch entfällt eine getrennte Befestigung der Leitung am Radträger. Das Statorgehäuse 21 ist auch stirnseitig umspritzt, damit eine Wärmeisolation zur Glocke 12 genutzt werden kann.

Die Glocke 12 wird über Dichtung 22 zum Bremssattel 2 abgedichtet und mittels Befestigungsschrauben 23 über einen Zwischenring 24 mit dem Bremssattelgehäuse verschraubt. Das Statorgehäuse 21 ist vorzugsweise mit einem Kerbstift 21a am Zwischenring 24 befestigt.

Diese Konzeption bietet sich zusätzlich als Diebstahlschutz an und spart die Kosten für die el. Lenkradverriegelung ein. Ein Ausbau ist aufwändig beim geparkten Fahrzeug, da es zur Radabnahme aufgebockt werden muss. Dieser Vorgang wird über die integrierten Querbeschleunigungsgeber des ESP erkannt. Zusätzlich muss Druck eingespeist werden, damit der Bremssattel demontiert werden kann. Dies ist ohne Kolbenentriegelung des Rotors nicht möglich, und dieser erfordert eine Elektronik zur Ansteuerung, was nur durch Ersatz des Stators oder Einspeisung über Zwischenstecker möglich ist. Zusammen gefasst sind die zuvor genannten Maßnahmen allesamt komplexe Eingriffe, die auch von der Diebstahlwarnanlage erkannt werden, so dass man hier einen kostengünstigen Diebstahlschutz und Warnung in Anspruch nehmen kann.

Die Fig. 2a zeigt die Spindel 3 mit Spindelhauptmutter 7 und Auswurfmutter 8 mit deren Verdrehsicherung als Stift 9. Die Fig. 2b zeigt die Spindel 3 unbelastet. Hierbei liegt die Spindel 3 mit ihrem Außengewinde 3c links an den Flanken der Verzahnung 7a der Spindelhauptmutter 7 leicht an oder hat ein kleines Spiel welches kleiner als das Spiel s ist. Die Auswurfmutter 8 umfasst die Spindel 7 nahezu spielfrei. Diese stützt sich auf einer, vorzugsweise als Tellerfeder ausgebildeten Feder 10 ab. Die Hauptspindelmutter 7 ist in axialer Richtung fest eingespannt und gegen axiales Verschieben relativ zum Bremssattel 2 gesichert.

In Fig. 2b wird die Spindel belastet, was dazu führt, dass zunächst die Kolbenkraft F_{K} von der Auswurfmutter 8 aufgenommen und auf die Tellerfeder 10 übertragen wird. Wenn das Gewindespiel s zwischen Spindel 3 und Hauptmutter 7 nicht mehr wirkt, wird die restliche hohe Kolbenkraft F_{K} auf die Hauptmutter 7 übertragen, welche im Gehäuse 2 bzw. im Stützring 24 in axialer Richtung abgestützt ist. Die Auswurfmutter 8 wird über das Gewindespiel s vorgespannt. Zum Abgleich der Toleranzen und Einstellung wird ein Einstellring 10 verwendet, der sich auf einem Fixierring 26 abstützt. Wird nun die Spindel 3 entlastet, so wirkt die Tellerfeder 10 auf die Auswurfmutter 8 und diese auf die Spindel 3 und verhindert ein Verkleben der Spindel 3, was durch eine Art Mikroverzahnung im Gewinde zustande kommen kann.

Durch diese Maßnahme und die beschriebene bewegliche Druckplatte 4 sind, neben der reibungsarmen Rotorlagerung in Bremsflüssigkeit, die benötigten Antriebsmomente für den Rotor 13 klein. Dadurch können Baugröße, Gewicht und Stromstärke zur Ansteuerung sehr niedrig gehalten werden. Im Vergleich zum Stand der Technik ist neben o.g. zusätzlich eine hohe Ausfallsicherheit gewährleistet.

Die Fig. 3 zeigt den Prinzipaufbau bestehend aus Bremssattel 31, 32 und Aktuator 31b und 32b wie er in Fig. 1 beschrieben ist. Die Druckbeaufschlagung erfolgt über die Leitung 25 vom Hauptzylinder 29 des Bremsgeräts 28, welches vorzugsweise von einem E-Motor 29 angetrieben wird. Das Bremsgerät 28 wird vom Bremspedal 27 mit Kraft beaufschlagt. Die Aktuatoren 31b, 32b und Bremsgerät 28 sind elektrisch mit einem zentralen Steuergerät 33 verbunden, welche die Funktion des Bremsgerätes, ABS, ESP und EPB, als Ansteuerung und Überwachung der Aktuatoren 31b und 32b mit ggf. Diebstahlwarnung übernimmt. Für die volle Funktionalität ist dieses Gerät mit dem Sensorcluster 34, mit Gierraten und Beschleunigungssensoren, dem Motorsteuergerät 35, dem Display 36, Bordnetzsteuergerät 40 und der Batterie 40a verbunden. Die Verbindung mit dem Sensorcluster dient der Festlegung des notwendigen Druckniveaus für die Kolbenbeaufschlagung und der beschriebenen Diebstahlwarnung.

Ähnlich dem Fahren mit der konventionellen Handbremse, bei der nur der Fahrer diese abhängig von der Parkstellung mehr oder weniger stark anzieht, kann hier automatisch über die Beschleunigungsgeber des Sensorclusters die Fahrzeugneigung festgestellt werden und entsprechend der Neigung der Druck eingesteuert werden. Dies reduziert die Beanspruchung der Dichtungen. Der jeweilige Druck wird vom Druckgeber 30 in der Druckleitung erfasst. Bei Ausfall des Druckgebers kann ersatzweise auch der Strom des E-Motors 39 verwendet werden, da dieser proportional zum Druck ist. Die Funktion der Druckmessung über den Druckgeber kann auch genutzt werden, wenn bei Ausfall des Bremsgerätes der notwendige Parkierdruck über das Bremspedal 27 aufgebracht werden kann. Hier kann im Display 36 neben der Fehlermeldung und Bedienungsanweisung für den Notbetrieb angezeigt werden, wenn der notwendige Druck erreicht ist. Die Verbindung zum Bordnetz-Steuergerät 40 mit Batterie 40a gibt dem zentralen Steuergerät 33 die Information über Batteriespannung, Ausfall des Generators und ggf. auch den Ladezustand SOC der Batterie. Hier kann z. B. der Extremfall "Ausfall Generator" und "Weiterfahrt bis zur leeren Batterie" erfasst und angezeigt werden. Hier kann auch gesteuert werden, dass die Fehleranzeige im Display anzeigt und die Motorsteuerung abschaltet, bevor das zentrale Steuergerät 33 und Display nicht mehr mit Strom versorgt werden kann. Hier trifft dann der eben beschriebene Fall zu, dass bei Ausfall des Bremsgerätes z. B. durch die Batterie die Parkierfunktion über Bremspedal und Restfunktion der elektronischen Parkierbremse mit kleiner Stromstärke noch von der Batterie erfolgen kann. Die oben beschriebene Diebstahlwarnung kann über ein Signalhorn 38 erfolgen.

Die Fig. 4 zeigt den Druckverlauf in Abhängigkeit des Kolbenweges. Die Druckniveaus P₁ und P₂ sollen eine Funktion der Fahrzeugneigung darstellen, wobei ein Sicherheitszuschlag von Δp erfolgt. Sollte das Fahrzeug in der Bremswirkung stark beansprucht werden, z. B. bei Passfahrten, kann dies aus Geschwindigkeit und Druck oder auch Statortemperatur ermittelt werden. Dementsprechend wird der Δ_{P} höher gewählt, um Relaxation und Setzerscheinungen in der Bremse zu berücksichtigen.

In dem Diagramm ist der Druckfußpunkt mit S_{A} und S_{E} bezeichnet, was einem neuem Belag und einem verschlissenem Bremsbelag gleichkommt. Wie bereits erwähnt, kann der Kolbenweg gemessen werden. Hierzu kann zwischen zwei Alternativen gewählt werden:
Bei der ersten Alternative wird der Rotor mit kleiner Stromstärke bewegt, bis die Spindel anliegt. Die kann bei jeder Parkstellung erfolgen. Infolge Kolbenverschleiß wird der Kolben- = Spindelweg größer von z. B. S_{A} auf S_{E}. Der Differenzweg entspricht dem Belagverschleiß. Eine Ungenauigkeit besteht darin, dass z. B. infolge Scheibenschlag der Bremsbelag nicht genau an der Scheibe anliegt.

Dies verhindert die 2. Möglichkeit, indem z. B. in der Parkierstellung z. B. alle 1000 km der Druck mit 5 bar eingespeist wird, so dass der Belag sicher anliegt. Hierdurch können die Messwerte S_{PA} und S_{PE} ermittelt werden. Δv entspricht dann genau dem Bremsbelagverschleiß. Anstelle des festen Referenzdrucks kann auch der Parkierdruck verwendet werden. Sollte dieser unterschiedlich sein, so kann zur Ermittlung von V mit der bekannten Sattelelastizität extrapoliert werden. Im Vergleich zur herkömmlichen Methode mit Kontaktstift kann hier eine stetige Auswertung des Belagverschleißes erfolgen, was bei der Fahrzeugdiagnose wichtig ist. So muss ein Servicemann das Rad nicht abnehmen, um den Belagsverschleiß zu prüfen. Weiterhin ist es möglich, unter Auswertung des mittleren Fahrzeuggewichts und aus dem Kennfeld der Motorsteuerung aus dem Verschleiß der einen Achse auf die andere zu extrapolieren. Hierdurch werden Kosten einspart.

Bei Mehrkolbenbremssattel bietet sich an, je einen Aktuator pro Bremskolben einzusetzen. Hier ist von Bedeutung, dass der Außendurchmesser des Stators nicht unwesentlich größer als der Bremskolbendurchmesser ist. Auch ist die Anwendung nur sinnvoll, wenn, wie hier gezeigt, der Gesamtaufbau einfach ist. Zwecks Vereinfachung der Trennkupplung 41 ist es vorteilhaft, beide Anschlusskabel in die gemeinsame Trennkupplung zu führen. Alternativ kann auch das Anschlusskabel des zweiten Stators in den ersten Stator mit eingespritzt werden, so dass zur Trennkupplung nur ein Kabel führt.

Wichtig ist die Diagnose der Parkierbremse. Die DE 10 2004055876 A1 schlägt hierzu vor, in einem mehrstufigen Prozess die Größen "Weg der Verriegelungseinrichtung (Spindel)" und "Kolbendruck" miteinander zu korrelieren. Alternativ ist die in der DE 10 2005 018649 beschriebene Methode anwendbar, bei der der Kolbenweg des H2 über den Druck gemessen wird. Diese Methode ist ohne Zeitverzug für den vorgenannten Messprozess.

Im Grenzfall ist es denkbar, dass z. B. bei abgefahrenen Bremsbelägen oder in einer falschen Zumessung des Parkierdrucks das Fahrzeug sich bewegt. Über die Radgeschwindigkeitsgeber kann dies vom Steuergerät erfasst werden, welches automatisch den Parkierdruck erhöht.

Die Kommunikation dem zentralen Steuergerät 33 mit Bordnetz 40, Motor 35 und Display 36 beinhaltet viele Potenziale zur Diagnose und Sicherstellung der Parkierbremse, z. B.
- Batterieausfall während der Fahrt hat zur Folge, dass Motor erst abgestellt wird, wenn EPB aktiviert ist, ähnlich wie bei Automatikgetriebe die Parkstellung;
- bei Ausfall Generator und leerer Batterie erfolgt die Abstellung des Motors nicht in Beschleunigungsphase (z. B. Überholvorgang);
- automatische Aktivierung der elektronischen Parkierbremse bei Steigung und Gefälle;
- dto. wenn bei Handschaltgetriebe kein Gang eingelegt ist

### Bezugszeichenliste:

- 1: Bremskolben
- 2: Bremssattel
- 3: Spindel
- 3a: Fortsatz der Spindel 3
- 3b: Schlitz
- 3c: Außengewinde der Spindel 3
- 4: Druckplatte
- 5: Hauptspindelmutter
- 6: Flansch
- 7: Flansch mit Hauptspindelmutter
- 7a: Gewinde der Hauptspindelmutter
- 8: Auswurfmutter
- 9: Verdrehsicherung
- 10: Feder
- 11: Abstandsring
- 12: Glocke
- 12a: Abstützring
- 12b: Innenwandung der Glocke
- 12c: Kragen der Glocke 12
- 13: Rotor
- 13a: Kupplungsstift
- 14: Stator 1
- 14a: Wicklung
- 15: Scheibenstator
- 15a: Wicklung
- 16: Gleitring links
- 17: Gleitring rechts
- 18: Anschlagring
- 19: Target
- 20: Drehwinkelgeber
- 21: Statorgehäuse
- 21a: Befestigungselement
- 22: O-Ring
- 23: Befestigungsschraube
- 24: Spannring
- 25: Druckleitung
- 26: Fixierung
- 27: Bremspedal
- 28: Bremskraftverstärker
- 29: Hauptbremszylinder
- 30: Druckgeber
- 31: Bremssattel 1
- 31a: el. Anschluss 1
- 32: Bremssattel 2
- 32a: el. Anschluss 2
- 33: zentrales Steuergerät
- 34: Sensorcluster
- 35: Motorsteuerung
- 36: Display
- 37: Drehzahlfühler
- 38: Signalhorn
- 39: E-Motor
- 40: Bordnetzsteuerung
- 40a: Batterie
- 41: Trennkupplung zur Karosserie

## Patentansprüche

1. Elektromagnetisch angetriebene Verriegelungsvorrichtung für einen Bremskolben (1) einer Feststellbremse, einen elektromagnetischen Antrieb (13, 14, 15) aufweisend, der eine auf den Bremskolben (1) wirkende Spindel (3) antreibt, wobei der elektromagnetische Antrieb eine bürstenlose elektrische Maschine (13, 14, 15) ist, wobei die Spindel (3) im Arbeitsraum (A) des Kolbens (1)
und der Rotor (13) im Hydraulikmedium anordbar ist, **dadurch gekennzeichnet, dass** der Rotor (13) und der Stator (14, 14a, 15, 15a) durch ein hülsenförmiges oder topfförmiges Teil (12) aus unmagnetischen Material, insbesondere eine unmagnetische Glocke voneinander getrennt sind.

2. Verriegelungsvorrichtung nach Anspruch 1, **dadurch gekennzeichnet, dass** der Rotor (13) und die Spindel (3) über eine Kupplung (13a) miteinander drehfest in Verbindung sind, wobei die Kupplung (13a) eine relative axiale Verschiebung zwischen Rotor (13) und Spindel (3) erlaubt, und der Rotor (13) in axialer Richtung im wesentlichen unverschieblich relativ zum Stator (14, 15) gelagert ist.

3. Verriegelungsvorrichtung nach Anspruch 2, **dadurch gekennzeichnet, dass** die Kupplung durch einen Bolzen oder Kupplungsstift (13a) gebildet ist, der mit seinen beiden Enden im Rotor (13) gelagert ist und die Spindel (3) durchgreift.

4. Verriegelungsvorrichtung nach Anspruch 3, **dadurch gekennzeichnet, dass** der Bolzen oder Kupplungsstift (13a) in axialer Richtung und in Umfangsrichtung formschlüssig am Rotor (13) mit seinen beiden Enden angeordnet ist und ein sich in axialer Richtung erstreckendes Langloch bzw. Schlitz (3b) des Fortsatzes (3a) der Spindel (3) durchgreift.

5. Verriegelungsvorrichtung nach einem der vorhergehenden Ansprüche, **dadurch gekennzeichnet, dass** die Spindel (3) an ihrer Außenseite ein Gewinde (3c) trägt, welches mit einem Innengewinde (7a) einer die Spindel (3) umgreifenden Spindelmutter (7) zusammenwirkt, wobei die Spindelmutter (7) in axialer Richtung unverschieblich in der Verriegelungsvorrichtung angeordnet und gegen Verdrehen gesichert ist.

6. Verriegelungsvorrichtung nach Anspruch 5, **dadurch gekennzeichnet, dass** eine gegen Verdrehen gesicherte Auswurfmutter (8) spielfrei mit dem Außengewinde (3c) der Spindel (3) zusammenwirkt und sich in axialer Richtung über eine Feder (10), insbesondere eine Tellerfeder, auf der Spindelmutter (7) abstützt.

7. Verriegelungsvorrichtung nach Anspruch 6, **dadurch gekennzeichnet, dass** die Spindelmutter (7) einen an den das Innengewinde (7a) aufweisenden Bereich angrenzenden zylindrischen Bereich (7b) aufweist, an dessen Innenwandung sich die Auswurfmutter (8) abstützt und in eine Aussparung (7c) eingreift oder teilweise in dieser einliegt, wobei die Aussparung (7c) derart ausgebildet ist, dass sie eine axiale Verschiebung aber kein Verdrehen zwischen Spindelmutter (7) und Auswurfmutter (8) zulässt.

8. Verriegelungsvorrichtung nach einem der vorhergehenden Ansprüche, **dadurch gekennzeichnet, dass** zwischen Kolben (1) und Spindel (3) eine Kraftübertragungselement (4), insbesondere in Form einer Druckplatte, angeordnet ist.

9. Verriegelungsvorrichtung nach einem der vorhergehenden Ansprüche, **dadurch gekennzeichnet, dass** der Kolben (1) eine zum Arbeitsraum (A) geöffnete stirnseitige Aussparung, insbesondere Bohrung, aufweist, in der die Spindel (3) und die Spindelmutter(7) zumindest teilweise angeordnet sind.

10. Verriegelungsvorrichtung nach einem der vorhergehenden Ansprüche, **dadurch gekennzeichnet, dass** der Rotor (13) in der Glocke (12) drehbar, insbesondere mittels Gleitstücken (16, 17) oder einer Lagerbuchse, gelagert ist.

11. Verriegelungsvorrichtung nach einem der vorhergehenden Ansprüche, **dadurch gekennzeichnet, dass** der Stator (14, 14a, 15, 15a) den zylindrischen Teil des Teils (12) umfasst und mit seiner Innenwandung an der äußeren Mantelfläche des Teils (12) anliegt.

12. Verriegelungsvorrichtung nach Anspruch 11, **dadurch gekennzeichnet, dass** der Rotor (13), das Teil(12) sowie der Stator (14, 14a, 15, 15a) in einem Statorgehäuse (21) angeordnet ist, wobei das Statorgehäuse (21) insbesondere Umspritzen des Teils (12) zusammen mit dem Stator (14, 14a, 15, 15a) herstellbar ist, wobei insbesondere ein Drehwinkelgeber (20) in das Gehäuse im Bereich des Target (19) einspritzbar ist.

13. Verriegelungsvorrichtung nach einem der vorhergehenden Ansprüche, **dadurch gekennzeichnet, dass** das Statorgehäuse (21) oder das Teil (12), insbesondere in Form einer Glocke (12), am Bremssattel (2), insbesondere abdichtend, befestigt ist.

14. Verriegelungsvorrichtung nach einem der vorhergehenden Ansprüche, **dadurch gekennzeichnet, dass** ein Drehwinkelgeber (20) die Drehbewegung des Rotors (13) ermittelt, wobei insbesondere am Rotor (13) ein Target (19) angeordnet sein kann.

15. Verriegelungsvorrichtung nach einem der vorhergehenden Ansprüche, **dadurch gekennzeichnet, dass** der Rotor (13) eine zusätzliche, redundante Wicklung aufweist.

16. Verriegelungsvorrichtung nach einem der vorhergehenden Ansprüche, **dadurch gekennzeichnet, dass** die Verriegelungsvorrichtung bei einem Fahrzeug mit Heckantrieb an der Hinterradbremse angeordnet ist, und dass die Verriegelungsvorrichtung bei einem Fahrzeug mit Frontantrieb an der Vorderradbremse angeordnet ist

17. Verriegelungsvorrichtung nach einem der vorhergehenden Ansprüche, **dadurch gekennzeichnet, dass** eine Verriegelungsvorrichtung an einer Vorderradbremse und eine Verriegelungsvorrichtung an einer Hinterradbremse, welche diagonal zur Fahrzeugachse zur Vorderradbremse angeordnet ist, angeordnet ist.

18. Verriegelungsvorrichtung nach einem der vorhergehenden Ansprüche, **dadurch gekennzeichnet, dass** die Verriegelungsvorrichtung von einem zentralen Fahrdynamik-Steuergerät (33, 35), insbesondere dem ESP-Steuergerät angesteuert wird.

19. Verriegelungsvorrichtung nach einem der vorhergehenden Ansprüche, **dadurch gekennzeichnet, dass** die Verriegelungsvorrichtung Teil eines Diebstahlschutzes für das Fahrzeug ist.

20. Verriegelungsvorrichtung nach einem der vorhergehenden Ansprüche, **dadurch gekennzeichnet, dass** das Steuergerät (33, 35) in Abhängigkeit des Signals eines Neigungssensors den Festsetzdruck einstellt bzw. einregelt.

21. Verriegelungsvorrichtung nach einem der vorhergehenden Ansprüche, **dadurch gekennzeichnet, dass** das Steuergerät (33, 35) den Parkierdruck auf den Bremskolben (1) erhöht, wenn das Steuergerät (33, 35) ein Drehen der Fahrzeugräder detektiert.

22. Verriegelungsvorrichtung nach einem der vorhergehenden Ansprüche, **dadurch gekennzeichnet, dass** der Arbeitsraum (A) über eine Druckleitung (25) mit Hydraulikmedium, insbesondere mittels des vom Hauptbremszylinder erzeugten Drucks für die Verriegelung und Entriegelung druckbeaufschlagbar ist.

23. Verriegelungsvorrichtung nach Anspruch 22, **dadurch gekennzeichnet, dass** die Druckeinspeisung in den Arbeitsraum (A) in Abhängigkeit von der Bremsbeanspruchung vor dem Parkieren erfolgt.

24. Elektromagnetische Feststellbremse mit einer Verriegelungsvorrichtung nach einem der vorhergehenden Ansprüche.

25. Elektromagnetische Feststellbremse nach Anspruch 24, **dadurch gekennzeichnet, dass** der Druckaufbau im Arbeitsraum (A) über das Bremspedal des Kraftfahrzeuges erfolgt.

26. Kraftfahrzeug mit einer elektromagnetischen Feststellbremse nach Anspruch 24 oder 25, **dadurch gekennzeichnet, dass** der Motor des Fahrzeuges bei Ausfall der Batterie erst dann abgestellt wird, wenn die Feststellbremse mittels der Verriegelungsvorrichtung verriegelt ist.

27. Kraftfahrzeug mit einer elektromagnetischen Feststellbremse nach Anspruch 24 oder 26, **dadurch gekennzeichnet, dass** die elektromagnetische Feststellbremse automatisch aktiviert wird, sofern die Fahrzeugsteuerung feststellt, dass das Fahrzeug nicht waagerecht geparkt ist und/oder bei einem stehend Fahrzeug mit Handschaltgetriebe kein Gang eingelegt ist.

28. Kraftfahrzeug mit einer elektromagnetischen Feststellbremse nach Anspruch 24 oder 25, **dadurch gekennzeichnet, dass** der Fahrzeugmotor während des Überhohlvorgangs und bei gleichzeitigem Ausfall des Generators und der Batterie nicht abgestellt wird.

## Claims

1. Electromagnetically driven locking device for a brake piston (1) of a parking brake, comprising an electromagnetic drive (13, 14, 15) driving a spindle (3) acting on the brake piston (1), wherein the electromagnetic drive is a brushless electric motor (13, 14, 15), wherein the spindle (3) is arrangeable in the working chamber (A) of the piston (1) and the rotor (13) is arranged in the hydraulic medium, **characterised in that** the rotor (13) and the stator (14, 14a, 15, 15a) are separated by a sleeve-type or pot-type part (12) consisting of non-magnetic material, especially a non-magnetic bell.

2. Locking device according to claim 1, **characterised in that** the rotor (13) and the spindle (3) are non-rotatably connected with one another via a coupling (13a), wherein the coupling (13a) allows a relative axial displacement between rotor (13) and spindle (3), and the rotor (13) is supported in the axial direction substantially such that it cannot displace relative to the stator (14, 15).

3. Locking device according to claim 2, **characterised in that** the coupling is formed by a bolt or coupling pin (13a) which is supported at both ends in the rotor (13) and passes through the spindle (3).

4. Locking device according to claim 3, **characterised in that** the bolt or coupling pin (13a) is arranged in the axial direction and in the circumferential direction with a positive fit to the rotor (13) with both ends and passes through a slotted hole or slot (3b), extending in the axial direction, of the extension (3a) to the spindle (3).

5. Locking device according to any of the preceding claims, **characterised in that** the spindle (3) has a thread (3c) on its outside, which interacts with an internal thread (7a) of a spindle nut (7) encompassing the spindle (3), wherein the spindle nut (7) is arranged in the locking device such that it cannot displace in the axial direction and is secured against rotation.

6. Locking device according to claim 5, **characterised in that** an eject nut (8) secured against rotation interacts without play with the external thread (3c) of the spindle (3) and is supported in the axial direction via a spring (10), in particular a disc spring, on the spindle nut (7).

7. Locking device according to claim 6, **characterised in that** the spindle nut (7) comprises a cylindrical area (7b) bordering the area with the internal thread (7a), on the inner wall of which the eject nut (8) is supported and engages in a recess (7c) or is partially inset therein, wherein the recess (7c) is formed such as to allow an axial displacement but no rotation between spindle nut (7) and eject nut (8).

8. Locking device according to any of the preceding claims, **characterised in that** between piston (1) and spindle (3) a power transmission element (4), in particular in the form of a pressure plate, is arranged.

9. Locking device according to any of the preceding claims, **characterised in that** the piston (1) comprises a frontal recess open to the working chamber (A), in particular a bore hole, in which the spindle (3) and the spindle nut (7) are arranged at least partially.

10. Locking device according to any of the preceding claims, **characterised in that** the rotor (13) is rotatable in the bell (12), in particular by means of slides (16, 17) or a bushing.

11. Locking device according to any of the preceding claims, **characterised in that** the stator (14, 14a, 15, 15a) comprises the cylindrical part of the part (12) and rests with its inner wall on the outer surface of the part (12).

12. Locking device according to claim 11, **characterised in that** the rotor (13), the part (12) and the stator (14, 14a, 15, 15a) is arranged in a stator housing (21), wherein the stator housing (21) can be manufactured in particular by injection moulding around the part (12) together with the stator (14, 14a, 15, 15a), wherein in particular a shaft encoder (20) can be injection moulded in the housing in the area of the target (19).

13. Locking device according to any of the preceding claims, **characterised in that** the stator housing (21) or the part (12), in particular in the form of a bell (12), is secured to the brake calliper (2), in particular providing a seal.

14. Locking device according to any of the preceding claims, **characterised in that** a shaft encoder (20) determines the rotational movement of the rotor (13), wherein in particular a target (19) can be arranged on the rotor (13).

15. Locking device according to any of the preceding claims, **characterised in that** the rotor (13) has an additional, redundant winding.

16. Locking device according to any of the preceding claims, **characterised in that** the locking device is arranged on the rear-wheel brake of a vehicle with rear-wheel drive, and **in that** the locking device is arranged on the front-wheel brake of a vehicle with front-wheel drive.

17. Locking device according to any of the preceding claims, **characterised in that** one locking device is arranged on a front-wheel brake and one locking device on a rear-wheel brake, arranged diagonally to the vehicle axis to the front-wheel brake.

18. Locking device according to any of the preceding claims, **characterised in that** the locking device is controlled by a central vehicle dynamics controller (33, 35) in particular an ESP control unit.

19. Locking device according to any of the preceding claims, **characterised in that** the locking device is part of a vehicle anti-theft protection system.

20. Locking device according to any of the preceding claims, **characterised in that** the controller (33, 35) sets or regulates the locking pressure as a function of the signal of a tilt sensor.

21. Locking device according to any of the preceding claims, **characterised in that** the controller (33, 35) increases the parking pressure on the brake piston (1), if the control unit (33, 35) detects a rotation of the vehicle wheels.

22. Locking device according to any of the preceding claims, **characterised in that** the working chamber (A) can be pressurised via a pressure line (25) with hydraulic medium, in particular by means of the pressure generated by the brake master cylinder for the locking and unlocking.

23. Locking device according to claim 22, **characterised in that** the pressure feed-in into the working chamber (A) takes place as a function of the brake load prior to parking.

24. Electromagnetic parking brake with a locking device according to any of the preceding claims.

25. Electromagnetic parking brake according to claim 24, **characterised in that** the pressure build-up in the working chamber (A) takes place via the brake pedal of the motor vehicle.

26. Motor vehicle with an electromagnetic parking brake according to claim 24 or 25, **characterised in that** in the event of battery failure, the vehicle engine is only switched off if the parking brake is locked by means of the locking device.

27. Motor vehicle with an electromagnetic parking brake according to claim 24 or 26, **characterised in that** the electromagnetic parking brake is automatically activated where the vehicle controller finds that the vehicle is not parked horizontally and/or where a manual shift car is stationary no gear has been selected.

28. Motor vehicle with an electromagnetic parking brake according to claim 24 or 25, **characterised in that** the vehicle engine, during an overtaking manoeuvre with simultaneous failure of the battery and generator, is not switched off.

## Revendications

1. Dispositif de verrouillage à entraînement électromagnétique destiné à un piston de frein (1) d'un frein de parking, présentant un entraînement électromagnétique (13, 14, 15), entraînant une broche (3) agissant sur le piston de frein (1), où l'entraînement électromagnétique est un moteur électrique sans balais (13, 14, 15), où la broche (3) est logée dans l'espace de travail (A) du piston (1) et le rotor (13) est disposé dans le fluide hydraulique, **caractérisé en ce que** le rotor (13) et le stator (14, 14a, 15, 15a) sont mutuellement séparés par une pièce (12) en forme de douille ou de pot réalisée en un matériau amagnétique, notamment une cloche amagnétique.

2. Dispositif de verrouillage selon la revendication 1, **caractérisé en ce que** le rotor (13) et la broche (3) sont mutuellement reliés de manière résistante à la rotation par l'intermédiaire d'un embrayage (13a), où l'embrayage (13a) permet un déplacement axial relatif entre le rotor (13) et la broche (3), et le rotor (13) est logé en direction axiale essentiellement de manière non déplaçable par rapport au stator (14, 15).

3. Dispositif de verrouillage selon la revendication 2, **caractérisé en ce que** l'embrayage est formé par un boulon ou une tige d'embrayage (13a) qui est logé(e) avec ses deux extrémités dans le rotor (13) et entre en prise avec la broche (3).

4. Dispositif de verrouillage selon la revendication 3, **caractérisé en ce que** le boulon ou la tige d'embrayage (13a) est agencé(e) par liaison de forme, en direction axiale et en direction circonférentielle, sur le rotor (13) avec ses deux extrémités et entre en prise avec un trou oblong ou une fente (3b) du prolongement (3a) de la broche (3) s'étendant en direction axiale.

5. Dispositif de verrouillage selon l'une des revendications précédentes, **caractérisé en ce que** la broche (3) porte sur son côté extérieur un filetage (3c) qui interagit avec un filetage intérieur (7a) de l'écrou de broche (7) entourant la broche (3), où l'écrou de broche (7) est agencé en direction axiale de manière non déplaçable dans le dispositif de verrouillage et sécurisé contre toute rotation.

6. Dispositif de verrouillage selon la revendication 5, **caractérisé en ce qu'**un écrou d'éjection (8) fixé de manière résistante à la rotation interagit exempt de jeu avec le filetage extérieur (3c) de la broche (3) et s'appuie en direction axiale par l'intermédiaire d'un ressort (10), en particulier un ressort à disque, contre l'écrou de broche (7).

7. Dispositif de verrouillage selon la revendication 6, **caractérisé en ce que** l'écrou de broche (7) présente un secteur cylindrique (7b) adjacent au secteur présentant le filetage intérieur (7a), sur la paroi intérieure duquel s'appuie l'écrou d'éjection (8) et pénètre dans un évidement (7c) ou est logé partiellement dans celui-ci, où l'évidement (7c) est conçu de sorte à permettre un déplacement axial, mais aucune rotation entre l'écrou de broche (7) et l'écrou d'éjection (8).

8. Dispositif de verrouillage selon l'une des revendications précédentes, **caractérisé en ce qu'**un élément de transmission de force (4), en particulier en forme d'une plaque d'impression, est agencé entre le piston (1) et la broche (3).

9. Dispositif de verrouillage selon l'une des revendications précédentes, **caractérisé en ce que** le piston (1) présente un évidement côté frontal ouvert vers l'espace de travail (A), en particulier un perçage, dans lequel sont agencés, au moins partiellement, la broche (3) et l'écrou de broche (7).

10. Dispositif de verrouillage selon l'une des revendications précédentes, **caractérisé en ce que** le rotor (13) est logé dans la cloche (12) de manière à tourner, en particulier à l'aide de pièces coulissantes (16, 17) ou d'un coussinet.

11. Dispositif de verrouillage selon l'une des revendications précédentes, **caractérisé en ce que** le stator (14, 14a, 15, 15a) comporte la partie cylindrique de la pièce (12) et s'appuie avec sa paroi intérieure contre la surface enveloppante de la pièce (12).

12. Dispositif de verrouillage selon la revendication 11, **caractérisé en ce que** le rotor (13), la pièce (12) ainsi que le stator (14, 14a, 15, 15a) sont agencés dans un carter de stator (21), où le carter de stator (21), en particulier le surmoulage de la pièce (12) ensemble avec le stator (14, 14a, 15, 15a), peut être fabriqué, où en particulier un capteur d'angle de rotation (20) peut être injecté dans le carter dans le secteur de la cible (19).

13. Dispositif de verrouillage selon l'une des revendications précédentes, **caractérisé en ce que** le logement de stator (21) ou la pièce (12), en particulier en forme d'une cloche (12), est fixé sur l'étrier de frein (2), an particulier de manière étanche.

14. Dispositif de verrouillage selon l'une des revendications précédentes, **caractérisé en ce qu'**un capteur d'angle de rotation (20) détermine le mouvement de rotation du rotor (13), où en particulier une cible (19) peut être agencée sur le rotor (13).

15. Dispositif de verrouillage selon l'une des revendications précédentes, **caractérisé en ce que** le rotor (13) présente un enroulement supplémentaire redondant.

16. Dispositif de verrouillage selon l'une des revendications précédentes, **caractérisé en ce que** le dispositif de verrouillage est agencé, lors d'un véhicule à propulsion avec traction arrière, sur le frein arrière, et **en ce que** le dispositif de verrouillage est agencé, lors d'un véhicule avec traction avant, sur le frein avant.

17. Dispositif de verrouillage selon l'une des revendications précédentes, **caractérisé en ce qu'un** dispositif de verrouillage est agencé sur un frein avant et qu'un dispositif de verrouillage est agencé sur un frein arrière, lequel est agencé en diagonal par rapport à l'essieu du véhicule en relation au frein avant.

18. Dispositif de verrouillage selon l'une des revendications précédentes, **caractérisé en ce que** le dispositif de verrouillage est commandé par un calculateur de la dynamique du véhicule central (33, 35), en particulier par le contrôleur ESP.

19. Dispositif de verrouillage selon l'une des revendications précédentes, **caractérisé en ce que** le dispositif de verrouillage est une partie d'un système de protection contre le vol.

20. Dispositif de verrouillage selon l'une des revendications précédentes, **caractérisé en ce que** l'appareil de commande (33, 35) règle ou ajuste en fonction du signal d'un capteur d'inclinaison la pression de réglage fixe.

21. Dispositif de verrouillage selon l'une des revendications précédentes, **caractérisé en ce que** l'appareil de commande (33, 35) augmente la pression de stationnement sur le piston de frein (1), lorsque l'appareil de commande (33, 35) détecte une rotation des roues du véhicule.

22. Dispositif de verrouillage selon l'une des revendications précédentes, **caractérisé en ce que** l'espace de travail (A) peut être sollicité par l'intermédiaire d'une conduite sous pression (25) avec un milieu hydraulique, en particulier à l'aide de la pression produite par le maître-cylindre de frein pour le verrouillage et déverrouillage.

23. Dispositif de verrouillage selon la revendication 22, **caractérisé en ce que** l'alimentation en pression dans l'espace de travail (A) a lieu en fonction de la sollicitation des freins avant le stationnement.

24. Frein de parking électromagnétique avec un dispositif de verrouillage selon l'une des revendications précédentes.

25. Frein de parking électromagnétique selon la revendication 24, **caractérisé en ce que** la montée de pression dans l'espace de travail (A) a lieu par l'intermédiaire de la pédale de frein du véhicule à moteur.

26. Véhicule à moteur avec un frein de parking électromagnétique selon la revendication 24 ou 25, **caractérisé en ce que** le moteur du véhicule n'est arrêté, lors d'une défaillance de la batterie, que lorsque le frein de parking est verrouillé à l'aide du dispositif de verrouillage.

27. Véhicule à moteur avec un frein de parking électromagnétique selon la revendication 24 ou 26, **caractérisé en ce que** le frein de parking électromagnétique est activé automatiquement, pour autant que la commande du véhicule détermine que le véhicule n'est pas stationné horizontalement et/ou qu'aucune vitesse n'est engagée lors d'un véhicule à l'arrêt avec boîte de vitesse manuelle.

28. Véhicule à moteur avec un frein de parking électromagnétique selon la revendication 24 ou 25, **caractérisé en ce que** le moteur du véhicule ne s'arrête pas pendant la manoeuvre de dépassement et lors d'une défaillance simultanée du générateur et de la batterie.
